# EUROPEAN PATENT SPECIFICATION

(11) **EP 2 698 907 B1**
(45) Date of publication and mention of the grant of the patent: **22.04.2020**
(21) Application number: 13729579.6
(22) Date of filing: 18.01.2013
(51) Int. Cl.: H02M 7/5388, H02M 1/00, H02M 7/493

(54) **INVERTER CONTROL METHOD AND DEVICE, AND INVERTER**
VERFAHREN UND VORRICHTUNG ZUR STEUERUNG EINES WECHSELRICHTERS UND WECHSELRICHTER
DISPOSITIF ET PROCÉDÉ DE COMMANDE D'ONDULEUR ET ONDULEUR

(30) Priority: 27.06.2012 CN 201210215692; 03.07.2012 CN 201210227609
(43) Date of publication of application: 19.02.2014
(73) Proprietor: Huawei Technologies Co., Ltd., Longgang District Shenzhen, Guangdong 518129 (CN)
(72) Inventor: ZHANG, Yanzhong, Shenzhen Guangdong 518129 (CN); GUO, Xin, Shenzhen Guangdong 518129 (CN); HU, Xuanchun, Shenzhen Guangdong 518129 (CN)
(74) Representative: Goddar, Heinz J.
(86) International application number: PCT/CN2013/070727
(87) International publication number: WO 2014/000440

(56) References cited:
- EP-A2- 1 531 538
- CN-A- 102 067 429
- CN-A- 102 255 331
- CN-A- 102 437 765
- CN-A- 102 761 283
- JP-A- 2009 225 489
- US-B1- 8 503 199
- JACKSON D K ET AL: "A power factor corrector with bidirectional power transfer capability", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, vol. 1, 18 June 2000 (2000-06-18), pages 365-370, XP010517264, ISBN: 978-0-7803-5692-4
- NONAKA S ET AL: "Single-phase composite PWM voltage source converter", INDUSTRY APPLICATIONS SOCIETY ANNUAL MEETING, 1994., CONFERENCE RECORD OF THE 1994 IEEE DENVER, CO, USA 2-6 OCT. 1994, NEW YORK, NY, USA,IEEE, 2 October 1994 (1994-10-02), pages 761-768, XP010124101, DOI: 10.1109/IAS.1994.377504 ISBN: 978-0-7803-1993-6
- ZUMEL P ET AL: "Efficiency improvement in multiphase converter by changing dynamically the number of phases", 2006 IEEE POWER ELECTRONICS SPECIALISTS CONFERENCE - 18-22 JUNE 2006 - JEJU, SOUTH KOREA, 2006 IEEE POWER ELECTRONICS SPECIALISTS CONFERENCE (IEEE CAT. NO. 06CH37819C) - 2006 - IEEE - PISCATAWAY, NJ, USA, 1 January 2006 (2006-01-01), pages 2845-2850, XP002493807, ISBN: 978-1-4244-9717-1

## Description

### TECHNICAL FIELD

Embodiments of the present invention relate to an electrical control technology, and in particular, to a method and an apparatus for inverter control, and an inverter.

### BACKGROUND

An inverter is a common apparatus to invert a direct current into an alternating current, so as to feed back the alternating current to an alternating current power grid. For example, after a solar panel generates a direct current, the direct current needs to be inverted into an alternating current by using an inverter and feed it back to an alternating current power grid.

A typical inverter structure in the prior art includes two high frequency bridge arms and corresponding high frequency inductors, which form two inverting modules, each of which is connected to a charging capacitor in parallel through an industrial frequency bridge arm to charge the charging capacitor. A charging capacitor is connected to a charging inductor in series, to feed amount of electricity of the charging capacitor back to an alternating current power grid. A basic working principle is: in each sine wave cycle of a power grid, two switches of a high frequency bridge arm are controlled to be turned on alternatively, to charge the charging capacitor; at the same time, switches of an industrial frequency arm are controlled to be turned on alternatively, to switch a direction of a current of the charging capacitor which is fed back to the power grid, to implement conversion from a direct current to an alternating current. In the foregoing working mode, in a sine wave cycle of an alternating current, two inverting modules work simultaneously and charging currents are staggered and superposed to form a final output current.

However, an inverter in the foregoing full-wave staggered working mode has a certain technical defect: when an instantaneous current that needs to be fed back to a power grid is too small, to obtain a proper current value, a high switching frequency is required to control turning-on and turning-off of switches on a high frequency bridge arm; frequent change of a current direction results in high loss of devices in an inverter, such as a switch and an inductor.

Jackson, D. et al.: "A power factor corrector with bidirectional power transfer capability", Power Electronics specialists conference, 2000. PESC00.2000 IEEE 31S T Annual 18-23 June 2000, Piscataway, NJ, USA, IEEE, vol.1, 2000, pages 365-370, describes circuitry capable of serving as an inverter comprising two half-bridge legs connecting to an AC utility through an inductor. One of the half-bridge legs may be operated as a high-frequency switching leg, the other as a line-frequency switching leg. A further interleaved topology is presented, wherein the high-frequency switching leg is duplicated.

Nonaka, S. et al.: "Single-phase composite PWM voltage source converter", Industry applications society annual meeting, 1994., Conference Record of the 1994 IEEE Denver, Co., USA 2-6 OCT. 1994, New York, NY, USA, IEEE, 1994, pages 761-768, describes a circuitry which can be used as an inverter connecting a dc battery (photovoltaic) and an ac load. A bridge circuit consists of four MOSFETs with antiparallel diodes and an additional auxiliary arm containing two further MOSFETs. On the ac side, a capacitor is connected for shaping a load voltage into a sinusoidal wave together with the corresponding LC filters of the bridge arms.

EP 1 531 538 A2 describes a boost converter with which the current path between a rectifier provided for rectifying the alternating voltage of mains and the load is divided into multiple current channels whose current flow can be influenced independently by power switches. A microcontroller is provided for triggering the switches. One of the channels is operated as a master channel with an independent operation, and the further channels are operated as slave channels with start signals being generated dependent on output signals from the master channel.

P. Zumel et al., "Efficiency improvement in multiphase converter by changing dynamically the number of phases", 2006 IEEE Power Electronics Specialists Conference, p. 2845-2850 describes techniques to improve the efficiency on multiphase converters, wherein the number of phases is dynamically changed in order to reduce power losses at light load. The phases are connected or disconnected as a function of load current.

### SUMMARY

Embodiments of the present invention provide a method according to claim 1 and an apparatus for inverter control according to claim 3, and an inverter according to claim 5, to optimize working performance of an inverter.

An embodiment of the present invention provides a method for control of a direct current / alternating current inverter, wherein the inverter control determines, according to a requirement on an alternating current which is fed back to a power grid, a value of an alternating current that should be output with the change of a sine wave cycle, wherein in the sine wave cycle, different quantities of inverting modules are switched and controlled to work, wherein each inverting module comprises a high frequency inductor and a high frequency bridge arm formed by two switches, the high frequency bridge arm is connected to a direct current input end, and each inverting module is further connected to an alternating current output end through a common industrial frequency bridge arm; wherein controlling an inverting module to work comprises that two switch devices of the high frequency bridge arm of the inverting module are controlled to be turned on alternatively such that a current in the high frequency inductor of the inverting module is a triangle wave, the method including: in the sine wave cycle, controlling an inverting module in a first work group to work, to generate an alternating current which is fed back to the power grid, in the same sine wave cycle, controlling the inverting module which is switched from the first work group to a second work group to work, to generate an alternating current which is fed back to the power grid, wherein the first work group comprises 1 inverting modules, the second work group comprises 2 inverting modules, and, when the two inverting modules are controlled to work simultaneously, the work frequencies of the two high frequency bridge arms are controlled such that the currents of the two high frequency inductors are always staggered by 180 degrees in a high frequency cycle to implement alternative working such that the triangle waves of the two currents overlay and their envelopes form an output alternating current, wherein the controlling the inverting module which is switched from the first work group to a second work group to work comprises: according to change of a value of an output current which is fed back to the power grid, controlling the inverting module which is switched from the first work group to the second work group to work, and wherein: in the sine wave cycle, the controlling an inverting module in a first work group to work comprises: in the sine wave cycle, when it is identified that the value of the output current which is fed back to the power grid should be lower than a first set threshold ig1, controlling the inverting module in the first work group to work; in the same sine wave cycle, the controlling the inverting module which is switched from the first work group to the second work group to work according to change of a value of an output current which is fed back to the power grid comprises: in the same sine wave cycle, when it is identified that the value of the output current which is fed back to the power grid should be higher than a second set threshold ig2, controlling the inverting modules in the second work group to work simultaneously; and 2·ig1 = ig2; wherein the two thresholds ig1 and ig2 are both absolute values and working processes of a positive half wave and a negative half wave of the sine wave cycle are symmetric in a mirror image.

An embodiment of the present invention further provides an apparatus for control of a direct current / alternating current inverter, wherein inverter control is configured to determine, according to a requirement on an alternating current which is fed back to a power grid, a value of an alternating current that should be output with the change of a sine wave cycle, wherein in a sine wave cycle, different quantities of inverting modules are configured to be switched and controlled to work, wherein each inverting module comprises a high frequency inductor and a high frequency bridge arm formed by two switches, the high frequency bridge arm is connected to a direct current input end, and each inverting module is further connected to an alternating current output end through an industrial frequency bridge arm; wherein controlling an inverting module to work comprises that two switch devices of the high frequency bridge arm of the inverting module are controlled to be turned on alternatively such that a current in the high frequency inductor of the inverting module is a triangle wave, the apparatus including: a first control module, configured to, in a sine wave cycle, control an inverting module in a first work group to work, to generate an alternating current which is fed back to the power grid; a second control module, configured to, in the same sine wave cycle, control the inverting module which is switched from the first work group to a second work group to work, to generate an alternating current which is fed back to the power grid, wherein the first work group includes 1 inverting modules, the second work group includes 2 inverting modules, and, when the two inverting modules are controlled to work simultaneously, the work frequencies of the two high frequency bridge arms are controlled such that the currents of the two high frequency inductors are always staggered by 180 degrees in a high frequency cycle to implement alternative working such that the triangle waves of the two currents overlay and their envelopes form an output alternating current, wherein the apparatus for inverter control further comprises a current identifying module, configured to identify a value of an output current which is fed back to the power grid; the first control module is further configured to, in the sine half wave cycle, control the inverting module in the first work group to work when the current identifying module identifies that the value of the output current which is fed back to the power grid should be lower than a first set threshold ig1; the second control module is further configured to, in the same sine wave cycle, control the inverting modules in the second work group to work simultaneously when the current identifying module identifies that the value of the output current which is fed back to the power grid should be higher than a second set threshold ig2; and 2·ig1 = ig2; wherein the two thresholds ig1 and ig2 are both absolute values and working processes of a positive half wave and a negative half wave of the sine wave cycle are symmetric in a mirror image.

An embodiment of the present invention further provides an inverter, including: at least two inverting modules, connected between a direct current input end and an alternating current output end, wherein 1 inverting module forms a first work group, and 2 inverting modules form a second work group; an apparatus for inverter control provided by any embodiment of the present invention is connected to each of the inverting modules, wherein each inverting module comprises a high frequency inductor and a high frequency bridge arm formed by two switches, the high frequency bridge arm is connected to the direct current input end, and each inverting module is further connected to the alternating current output end through an industrial frequency bridge arm.

In a sine wave cycle, a method and an apparatus for inverter control, and an inverter provided by embodiments of the present invention switch and control different quantities of inverting modules to work, to make the loss of the inverter adapt to a current working status and optimize the working performance of the inverter. The foregoing technical solutions may control the switching operation according to an output current value, to reduce the loss of an inverter.

### BRIEF DESCRIPTION OF DRAWINGS

FIG. 1 is a structural schematic diagram of a typical inverter according to an embodiment of the present invention;
FIG. 2 is a variation curve graph of a current in an inverter under the control of the method for inverter control according to Embodiment 1 of the present invention;
FIG. 3 is a schematic structural diagram of an apparatus for inverter control according to Embodiment 2 of the present invention.

### DESCRIPTION OF EMBODIMENTS

### Embodiment 1

Embodiment 1 of the present invention provides a method for inverter control, which is applicable to control of a direct current/alternating current inverter. For clear description, the structure of the inverter controlled is first introduced simply.

An inverter which is applicable to the embodiment of the present invention includes at least two inverting modules, which are connected between a direct current input end and an alternating current output end; the direct current input end is an input end for providing a direct current, and the alternating current output end is an output end for feeding back an alternating current to a power grid, where m inverting modules form a first work group, n inverting modules form a second work group, and m is smaller than n. The working structure and principle of performing conversion between a direct current and an alternating current by an inverting module may be implemented in a plurality of ways.

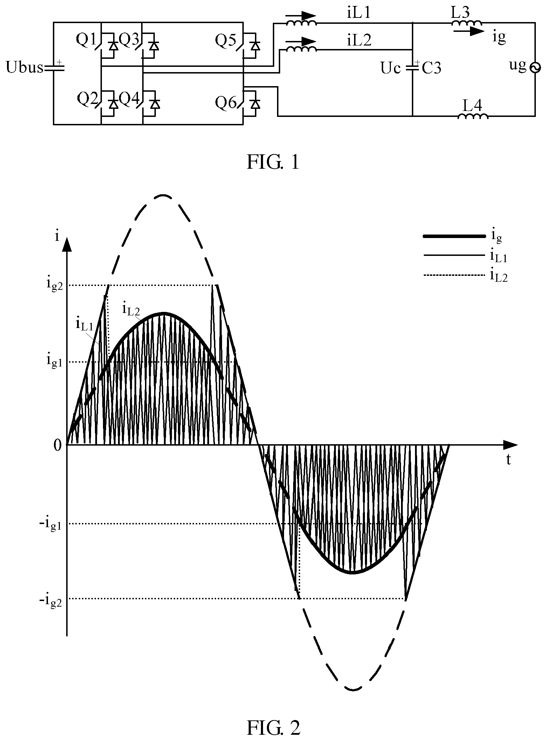

FIG. 1 is a structural schematic diagram of a typical inverter according to an embodiment of the present invention. As shown in FIG. 1, each inverting module includes a high frequency bridge arm and a high frequency inductor; the inverting module is connected to two ends of a charging capacitor C3 in parallel through an industrial bridge arm, and the charging capacitor C3 and a charging inductor L3 that are connected in series are connected to an alternating current output end in parallel, to feed back an alternating current to the alternating current output end, where an alternating current voltage is recorded as Ug. Two ends of the high frequency bridge arm are connected to the direct current input end in parallel, as shown in FIG. 1, the direct current input end inputs an input direct current voltage Ubus. Each high frequency bridge arm includes two switch devices, and the two switch devices are turned on and turned off alternatively, so that a current in a high frequency inductor changes upward and downward to complete the charging of the charging capacitor C3. As shown in FIG. 1, a high frequency bridge arm formed by switch devices Q1 and Q2 and a high frequency inductor L1 form an inverting module, a high frequency bridge arm formed by switch devices Q3 and Q4 and a high frequency inductor L2 form another inverting module. The working principles and structures of the inverting modules are the same. An industrial bridge arm also includes two switch devices, and the two switch devices are turned on and turned off alternatively, to control a direction of a current for charging the charging capacitor C3. As shown in FIG. 1, switch devices Q5 and Q6 form an industrial bridge arm. When a sine wave of an alternating current voltage in a power grid is in a positive half wave, that is, when Ug>0, Q6 is turned on and Q5 is turned off; when a sine wave of an alternating current voltage in the power grid is in a negative half wave, that is, when Ug<0, Q5 is turned on and Q6 is turned off. A person skilled in the art may understand that the structure of an inverting module for implementing conversion from a direct current to an alternating current is not limited to the foregoing description.

Based on the typical inverter structure shown in FIG. 1, a method for inverter control provided by the embodiment includes the following steps: in a sine wave cycle, controlling a first work group and a second work group to work alternatively, to generate an alternating current which is fed back to a power grid, where the first work group includes m inverting modules, the second work group includes n inverting modules, and m is smaller than n. That is, in a sine wave cycle, quantities of inverting modules that work simultaneously are different, for example, in the inverter shown in FIG. 1, in a period of time, two inverting modules are working simultaneously; in another period of time, only one inverter is working, that means m=1 and n=2.

With the technical solution of the embodiment, according to different requirements in a sine wave cycle, different quantities of inverting modules may be controlled to work, to improve flexibility of control of inverters. The technical solution is especially applicable to a case in which an output current varies in a sine wave cycle; different quantities of inverting modules may be selected to work, that is, according to the change of a value of an output current which is fed back to a power grid, a first work group and a second work group are controlled to work alternatively, in order to properly reduce an on-off frequency of a switch device in an inverting module, reduce device loss, and improve the service life and working efficiency of the inverter.

Preferably, the operation of controlling a first work group and a second work group to work alternatively according to the change of a value of an output current which is fed back to a power grid include the following steps:
when it is identified that a value of the output current which is fed back to the power grid is lower than a first set threshold ig1, controlling an inverting module in the first work group to work;
when it is identified that a value of the output current which is fed back to the power grid is higher than a second set threshold ig2, controlling an inverting module in the second work group to work;
where n ig1=m ig2.

The inverter shown in FIG. 1 is taken as an example to describe a working principle. The first work group includes an inverting module, and the second work group includes two inverting modules.

An apparatus for inverter control determines, according to a requirement on an alternating current which is fed back to the power grid, a value of an alternating current that should be output with the change of a sine wave cycle. When it is identified that a value of an output current which is fed back to the power grid should be lower than the set threshold ig1, one inverting module is only controlled to work, that is, two switch devices of a high frequency bridge arm are controlled to be turned on alternatively. The change of an output current value iL1 of the inverting module of the high frequency bridge arm is shown in FIG. 2.

When an alternating current voltage Ug>0, that is, the power grid is in a positive half wave, a switch device Q6 is turned on and a switch device Q5 is turned off; when a switch device Q1 is turned on and a switch device Q2 is turned off, the current iL1 of a high frequency inductor L1 increases; when the switch device Q1 is turned off and the switch device Q2 is turned on, the current iL1 of the high frequency inductor L1 decreases. Therefore, the current in the high frequency inductor L1 is a triangle wave, as shown by a thin solid line in FIG. 2. An envelope of the triangle wave forms an output alternating current, whose current value is recorded as ig.

When it is identified that a value of the output current which is fed back to the power grid should be higher than the second set threshold ig2, two inverting modules are controlled to work simultaneously. The working process of a high frequency bridge arm of switch devices Q3 and Q4 is similar to the working process of a high frequency bridge arm of the switch devices Q1 and Q2, and a current in a high frequency inductor L2 is a triangle wave, as shown by a thin dotted line in FIG. 2. By controlling work frequencies of the two high frequency bridge arms, iL1 and iL2 are always staggered by 180 degrees in a high frequency cycle, to implement alternative working. The triangle waves of the two currents overlay, and their envelopes form an output alternating current.

To make output currents of different quantities of inverting modules meet a requirement of an output alternating current voltage, the current values satisfy n·ig1=m·ig2, as shown in FIG. 2, ig2 is two times of ig1. The two thresholds are both understood as absolute values and working processes of a positive half wave and a negative half wave are symmetric in a mirror image.

The foregoing technical solution solves the disadvantage of a high switching frequency of a high frequency bridge arm due to that an instantaneous value of a grid-tied current is too small in the prior art. Because a grid-tied current ig changes in a sine form in an industrial frequency cycle (also called a sine wave cycle), there is always an interval in which an instantaneous value of the current is very small. When the instantaneous value of the grid-tied current ig is too small, peak values of the currents iL1 and iL2 of high frequency inductors are also small; therefore, the cycles of two high frequency bridge arms are short, that is, the switching frequencies are high. In the foregoing technical solution, a sine wave cycle of a grid-tied current is divided into two parts, independent working of a single bridge arm and alternative working of two bridge arms. By selecting a proper switching point between a single bridge arm and two bridge arms, drive loss can be reduced by decreasing a drive frequency of a control apparatus, and switching loss can be reduced by decreasing a switching frequency of a high frequency bridge arm; correspondingly, the change frequency of a current in an inductor also decreases, so inductor loss can be reduced, and reducing loss may certainly result in improvement of efficiency. The current threshold based on which switching is performed may be set after loss and inversion efficiency are comprehensively considered. Normally, at a current threshold, loss of working of a single bridge arm and loss of working of two bridge arms are almost the same, and a detailed value relates to an actual circuit.

Of course, a person skilled in the art can understand that the basis for controlling switching between work groups is not limited to an output current value; switching can be controlled according to other parameters, such as an output voltage value and an input voltage value.

### Embodiment 2

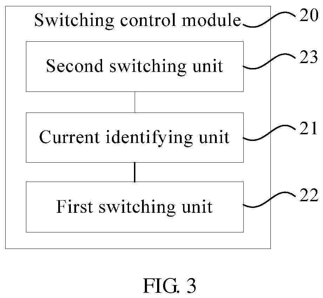

FIG. 3 is a schematic structural diagram of an apparatus for inverter control according to Embodiment 2 of the present invention. The control apparatus may be undertaken by hardware and implemented by software, for example, by a digital signal processor (Digital Singinal Processor, DSP), which controls an inverter to implement conversion from a direct current to an alternating current. The control apparatus includes: a switching control module 20, configured to, in a sine wave cycle, control a first work group and a second work group to work alternatively, to generate an alternating current which is fed back to a power grid, where the first work group includes m inverting modules, the second work group includes n inverting modules, and m is smaller than n.

Preferably, the switching control module 20 specifically includes: a current identifying unit 21, a first switching unit 22, and a second switching unit 23, where the current identifying unit 21 is configured to identify a value of a output current which is fed back to the power grid; the first switching unit 22 is configured to control an inverting module in the first work group to work when the current identifying unit 21 identifies that the value of the output current which is fed back to the power grid is lower than a first set threshold ig1; the second switching unit 23 is configured to control an inverting module in the second work group to work when the current identifying unit 21 identifies that the value of the output current which is fed back to the power grid is higher than a second set threshold ig2, where n ig1=m ig2.

The technical solution of the embodiment may implement the method for inverter control provided in the embodiment of the present invention; with corresponding function modules, different quantities of inverting modules are controlled to work, to improve flexibility of control of inverters, especially to decrease an on-off frequency of a switch in an inverting module according to the change situation of a current and to reduce device loss.

### Embodiment 3

An Embodiment 3 of the present invention provides an inverter which includes at least two inverting modules connected between a direct current input end and an alternating current output end, where m inverting modules form a first work group, n inverting modules form a second work group, and m is smaller than n. The inverter further includes an apparatus for inverter control provided in an embodiment of the present invention, which is connected to each inverting module. Work groups with different quantities of inverting modules work alternatively, and inverting modules may be assigned to different work groups.

As shown in FIG. 1, in the inverter, each inverting module may include a high frequency inductor and a high frequency bridge arm formed by two switches, where the high frequency bridge arm is connected to the direct current input end, and each inverting module is connected to the alternating current output end through an industrial frequency bridge arm. Of course, the detailed structure of an inverting module is not limited to the foregoing description; an inverter circuit capable of implementing conversion between a direct current and an alternating current may be used as an inverting module.

For an existing typical inverter with a full wave staggered working mode, of which, m is equal to 1 and n is equal to 2, it may implement the technical solution in the embodiment of the present invention by changing its control policy, without changing its circuit structure.

A person of ordinary skill in the art may understand that all or a part of the steps in each of the foregoing method embodiments may be implemented by a computer program instructing relevant hardware. The program may be stored in a computer readable storage medium. When the program is run, steps of each of the method embodiments are performed; the storage medium includes any medium that is capable of storing program codes, such as a ROM, a RAM, a magnetic disk, or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the present invention as defined by the appended claims.

## Claims

1. A method for control of a direct current / alternating current inverter,
wherein the inverter control determines, according to a requirement on an alternating current (ig) which is fed back to a power grid (ug), a value of an alternating current that should be output with the change of a sine wave cycle,
wherein in the sine wave cycle, different quantities of inverting modules are switched and controlled to work,
wherein each inverting module comprises a high frequency inductor (L1, L2) and a high frequency bridge arm formed by two switches (Q1, Q2; Q3, Q4), the high frequency bridge arm is connected to a direct current input end (Ubus), and each inverting module (Q1, Q2; Q3, Q4) is further connected to an alternating current output end (L4) through a common industrial frequency bridge arm (Q5, Q6);
wherein controlling an inverting module (Q1, Q2; Q3, Q4) to work comprises that two switch devices (Q1, Q2; Q3, Q4) of the high frequency bridge arm of the inverting module are controlled to be turned on alternatively such that a current (iLl, iL2) in the high frequency inductor (L1, L2) of the inverting module is a triangle wave,
the method comprising:
in the sine wave cycle, controlling an inverting module in a first work group to work, to generate an alternating current (ig) which is fed back to the power grid (ug);
in the same sine wave cycle, controlling the inverting module which is switched from the first work group to a second work group to work, to generate an alternating current (ig) which is fed back to the power grid (ug), wherein the first work group comprises 1 inverting module, the second work group comprises 2 inverting modules, and, when the two inverting modules are controlled to work simultaneously, the work frequencies of the two high frequency bridge arms (Q1, Q2; Q3, Q4) are controlled such that the currents (iLl, iL2) of the two high frequency inductors are always staggered by 180 degrees in a high frequency cycle to implement alternative working such that the triangle waves of the two currents (iLl, iL2) overlay and their envelopes form an output alternating current (ig), wherein the controlling the inverting module which is switched from the first work group to a second work group to work comprises:
according to change of a value of an output current (ig) which is fed back to the power grid (ug), controlling the inverting module which is switched from the first work group to the second work group to work, and wherein:
in the sine wave cycle, the controlling an inverting module in a first work group to work comprises: in the sine wave cycle, when it is identified that the value of the output current (ig) which is fed back to the power grid (ug) should be lower than a first set threshold ig1, controlling the inverting module in the first work group to work;
in the same sine wave cycle, the controlling the inverting module which is switched from the first work group to the second work group to work according to change of a value of an output current (ig) which is fed back to the power grid (ug) comprises: in the same sine wave cycle, when it is identified that the value of the output current (ig) which is fed back to the power grid (ug) should be higher than a second set threshold ig2, controlling the inverting modules in the second work group to work simultaneously; and wherein
2·ig1= ig2; wherein the two thresholds ig1 and ig2 are both absolute values and working processes of a positive half wave and a negative half wave of the sine wave cycle are symmetric in a mirror image.

2. The method according to claim 1, wherein
in the sine wave cycle, the controlling an inverting module in a first work group to work comprises: in the sine wave cycle, generating a drive signal for controlling the two switches (Q1, Q2) of the high frequency bridge arm to work alternatively, and sending the drive signal to the high frequency bridge arm of the inverting module in the first work group, to control the inverting module in the first work group to work; in the same sine wave cycle, the controlling the inverting module which is switched from the first work group to a second work group to work comprises: in the same sine wave cycle, generating a drive signal for controlling the two switches (Q1, Q2; Q3, Q4) of the high frequency bridge arm to work alternatively, sending the drive signal to a high frequency bridge arm of each inverting module in the second work group, to control each inverting module which is switched from the first work group to the second work group to work.

3. An apparatus for control of a direct current / alternating current inverter,
wherein the inverter control apparatus is configured to determine, according to a requirement on an alternating current which is fed back to a power grid, a value of an alternating current (ig) that should be output with the change of a sine wave cycle,
wherein in a sine wave cycle, different quantities of inverting modules are configured to be switched and controlled to work,
wherein each inverting module comprises a high frequency inductor (L1, L2) and a high frequency bridge arm formed by two switches (Q1, Q2; Q3, Q4), the high frequency bridge arm (Q1, Q2; Q3, Q4) is connected to a direct current input end (Ubus), and each inverting module is further connected to an alternating current output end (L4) through an industrial frequency bridge arm (Q5, Q6);
wherein controlling an inverting module to work comprises that two switch devices of the high frequency bridge arm (Q1, Q2; Q3, Q4) of the inverting module are controlled to be turned on alternatively such that a current (iLl, iL2) in the high frequency inductor (L1, L2) of the inverting module is a triangle wave,
the apparatus comprising:
a first control module (20, 22), configured to, in a sine wave cycle, control an inverting module in a first work group to work, to generate an alternating current (ig) which is fed back to the power grid (ug);
a second control module (20, 23), configured to, in the same sine wave cycle, control the inverting module which is switched from the first work group to a second work group to work, to generate an alternating current (ig) which is fed back to the power grid (ug), wherein, the first work group comprises 1 inverting module, the second work group comprises 2 inverting modules, and, when the two inverting modules are controlled to work simultaneously, the work frequencies of the two high frequency bridge arms are controlled such that the currents (iLl, iL2) of the two high frequency inductors are always staggered by 180 degrees in a high frequency cycle to implement alternative working such that the triangle waves of the two currents overlay and their envelopes form an output alternating current (ig), wherein the apparatus for inverter control further comprises a current identifying module, configured to identify a value of an output current (ig) which is fed back to the power grid (ug);
the first control module (22) is further configured to, in the sine wave cycle, control the inverting module in the first work group to work when the current identifying module identifies that the value of the output current (ig) which is fed back to the power grid (ug) should be lower than a first set threshold ig1;
the second control module (23) is further configured to, in the same sine wave cycle, control the inverting modules in the second work group to work simultaneously when the current identifying module identifies that the value of the output current (ig) which is fed back to the power grid (ug) should be higher than a second set threshold ig2; and wherein
2·ig1 = ig2; wherein the two thresholds ig1 and ig2 are both absolute values and working processes of a positive half wave and a negative half wave of the sine wave cycle are symmetric in a mirror image.

4. The apparatus for inverter control according to claim 3, wherein
the first control module (22) comprises:
a first signal generation unit configured to, in the sine wave cycle, generate a drive signal for controlling the two switches (Q1, Q2) of the high frequency bridge arm to work alternatively;
a second signal sending unit configured to send the drive signal to a high frequency bridge arm (Q1, Q2) of each inverting module in the first work group, to control each inverting module in the first work group to work;
and the second control module (23) comprises:
a second signal generation unit configured to generate a drive signal for controlling the two switches (Q1, Q2; Q3, Q4) of the high frequency bridge arm to work alternatively; a second signal sending unit configured to send the drive signal to a high frequency bridge arm (Q1, Q2; Q3, Q4) of each inverting module in the second work group, to control each inverting module which is switched the first work group to the second work group to work.

5. An inverter, comprising:
at least two inverting modules, connected between a direct current input end (Ubus) and an alternating current output end, wherein 1 inverter module forms a first work group, and 2 inverter modules form a second work group; and
the apparatus for inverter control according to claim 3 or 4, connected to each of the inverting modules,
wherein:
each inverting module comprises a high frequency inductor (L1, L2) and a high frequency bridge arm formed by two switches (Q1, Q2; Q3, Q4), the high frequency bridge arm is connected to the direct current input end (Ubus), and each inverting module is further connected to the alternating current output end (L4) through an industrial frequency bridge arm (Q5, Q6).

## Patentansprüche

1. Verfahren zur Steuerung eines Gleichstrom/Wechselstrom-Wechselrichters,
wobei die Wechselrichtersteuerung gemäß einer Anforderung an einen Wechselstrom (ig), der in ein Stromnetz (ug) zurückgespeist wird, einen Wert eines Wechselstroms bestimmt, der mit der Veränderung eines Sinuswellenzyklus ausgegeben werden soll, wobei in dem Sinuswellenzyklus verschiedene Quantitäten Wechselrichtermodule geschaltet und gesteuert werden, um zu arbeiten,
wobei jedes Wechselrichtermodul einen Hochfrequenzinduktor (L1, L2) und einen Hochfrequenzbrückenzweig umfasst, der durch zwei Schalter (Q1, Q2; Q3, Q4) ausgebildet ist, der Hochfrequenzbrückenzweig mit einer Gleichstromeingangsseite (Ubus) verbunden ist und jedes Wechselrichtermodul (Q1, Q2; Q3, Q4) weiterhin über einen gemeinsamen Industriefrequenzbrückenzweig (Q5, Q6) mit einer Wechselstromausgangsseite (L4) verbunden ist;
wobei Steuern eines Wechselrichtermoduls (Q1, Q2; Q3, Q4), um zu arbeiten, umfasst, dass zwei Schaltvorrichtungen (Q1, Q2; Q3, Q4) des Hochfrequenzbrückenzweigs des Wechselrichtermoduls gesteuert werden, um derartig abwechselnd eingeschaltet zu sein, dass ein Strom (iLl, iL2) in dem Hochfrequenzinduktor (L1, L2) des Wechselrichtermoduls eine Dreieckwelle ist,
das Verfahren Folgendes umfassend:
in dem Sinuswellenzyklus Steuern eines Wechselrichtermoduls, um in einer ersten Arbeitsgruppe zu arbeiten, um einen Wechselstrom (ig) zu erzeugen, der in das Stromnetz (ug) zurückgespeist wird; in dem gleichen Sinuswellenzyklus Steuern des Wechselrichtermoduls, das aus der ersten Arbeitsgruppe in eine zweite Arbeitsgruppe umgeschaltet wird, um zu arbeiten, um einen Wechselstrom (ig) zu erzeugen, der in das Stromnetz (ug) zurückgespeist wird, wobei die erste Arbeitsgruppe 1 Wechselrichtermodul umfasst, die zweite Arbeitsgruppe 2 Wechselrichtermodule umfasst, und, wenn die beiden Wechselrichtermodule gesteuert werden, um gleichzeitig zu arbeiten, die Arbeitsfrequenzen der beiden Hochfrequenzbrückenzweige (Q1, Q2; Q3, Q4) derartig gesteuert werden, dass die Ströme (iL1, iL2) der beiden Hochfrequenzinduktoren in einem Hochfrequenzzyklus stets um 180 Grad versetzt sind, um alternatives Arbeiten derartig zu implementieren, dass sich die Dreieckwellen der beiden Ströme (iLl, iL2) überlagern und ihre Hüllkurven einen Ausgangswechselstrom (ig) ausbilden, wobei das Steuern des Wechselrichtermoduls, das aus der ersten Arbeitsgruppe in eine zweite Arbeitsgruppe umgeschaltet wird, um zu arbeiten, Folgendes umfasst: gemäß einer Veränderung eines Werts eines Ausgangsstroms (ig), der in das Stromnetz (ug) zurückgespeist wird, Steuern des Wechselrichtermoduls, das aus der ersten Arbeitsgruppe in die zweite Arbeitsgruppe umgeschaltet wird, um zu arbeiten, und wobei:
in dem Sinuswellenzyklus das Steuern eines Wechselrichtermoduls in einer ersten Arbeitsgruppe, um zu arbeiten, Folgendes umfasst: in dem Sinuswellenzyklus, wenn identifiziert wird, dass der Wert des Ausgangsstroms (ig), der in das Stromnetz (ug) zurückgespeist wird, niedriger sein soll als ein erster Sollschwellenwert ig1, Steuern des Wechselrichtermoduls in der ersten Arbeitsgruppe, um zu arbeiten; in dem gleichen Sinuswellenzyklus das Steuern des Wechselrichtermoduls, das aus der ersten Arbeitsgruppe in die zweite Arbeitsgruppe umgeschaltet wird, um zu arbeiten, gemäß einer Veränderung eines Werts eines Ausgangsstroms (ig), der in das Stromnetz (ug) zurückgespeist wird, Folgendes umfasst: in dem gleichen Sinuswellenzyklus, wenn identifiziert wird, dass der Wert des Ausgangsstroms (ig), der in das Stromnetz (ug) zurückgespeist wird, höher sein soll als ein zweiter Sollschwellenwert ig2, Steuern der Wechselrichtermodule in der zweiten Arbeitsgruppe, um gleichzeitig zu arbeiten; und wobei 2•ig1 = ig2; wobei die zwei Schwellenwerte ig1 und ig2 beide Absolutwerte sind und Arbeitsprozesse einer positiven Halbwelle und einer negativen Halbwelle des Sinuswellenzyklus spiegelbildlich symmetrisch sind.

2. Verfahren nach Anspruch 1, wobei
in dem Sinuswellenzyklus das Steuern eines Wechselrichtermoduls in einer ersten Arbeitsgruppe, um zu arbeiten, Folgendes umfasst: in dem Sinuswellenzyklus Erzeugen eines Treibersignals zum Steuern der beiden Schalter (Q1, Q2) des Hochfrequenzbrückenzweigs, um abwechselnd zu arbeiten, und Senden des Treibersignals an den Hochfrequenzbrückenzweig des Wechselrichtermoduls in der ersten Arbeitsgruppe, um das Wechselrichtermodul in der ersten Arbeitsgruppe zu steuern, um zu arbeiten; in dem gleichen Sinuswellenzyklus, das Steuern des Wechselrichtermoduls, das aus der ersten Arbeitsgruppe in eine zweite Arbeitsgruppe umgeschaltet wird, um zu arbeiten, Folgendes umfasst: in dem gleichen Sinuswellenzyklus Erzeugen eines Treibersignals zum Steuern der beiden Schalter (Q1, Q2; Q3, Q4) des Hochfrequenzbrückenzweigs, um abwechselnd zu arbeiten, Senden des Treibersignals an einen Hochfrequenzbrückenzweig jedes Wechselrichtermoduls in der zweiten Arbeitsgruppe, um jedes Wechselrichtermodul, das aus der ersten Arbeitsgruppe in die zweite Arbeitsgruppe umgeschaltet wird, zu steuern, um zu arbeiten.

3. Vorrichtung zur Steuerung eines Gleichstrom/Wechselstrom-Wechselrichters,
wobei die Wechselrichtersteuerungsvorrichtung eingerichtet ist, um gemäß einer Anforderung an einen Wechselstrom, der in ein Stromnetz zurückgespeist wird, einen Wert eines Wechselstroms (ig) zu bestimmen, der mit der Veränderung eines Sinuswellenzyklus ausgegeben werden soll,
wobei in einem Sinuswellenzyklus verschiedene Quantitäten Wechselrichtermodule eingerichtet sind, um geschaltet und gesteuert zu werden, um zu arbeiten, wobei jedes Wechselrichtermodul einen Hochfrequenzinduktor (L1, L2) und einen Hochfrequenzbrückenzweig umfasst, der durch zwei Schalter (Q1, Q2; Q3, Q4) ausgebildet ist, der Hochfrequenzbrückenzweig (Q1, Q2; Q3, Q4) mit einer Gleichstromeingangsseite (Ubus) verbunden ist und jedes Wechselrichtermodul weiterhin über einen Industriefrequenzbrückenzweig (Q5, Q6) mit einer Wechselstromausgangsseite (L4) verbunden ist;
wobei Steuern eines Wechselrichtermoduls, um zu arbeiten, umfasst, dass zwei Schaltvorrichtungen des Hochfrequenzbrückenzweigs (Q1, Q2; Q3, Q4) des Wechselrichtermoduls gesteuert werden, um derartig abwechselnd eingeschaltet zu sein, dass ein Strom (iLl, iL2) in dem Hochfrequenzinduktor (L1, L2) des Wechselrichtermoduls eine Dreieckwelle ist,
die Vorrichtung Folgendes umfassend:
ein erstes Steuerungsmodul (20, 22), das eingerichtet ist, um in einem Sinuswellenzyklus ein Wechselrichtermodul in einer ersten Arbeitsgruppe zu steuern, um zu arbeiten, um einen Wechselstrom (ig) zu erzeugen, der in das Stromnetz (ug) zurückgespeist wird;
ein zweites Steuerungsmodul (20, 23), das eingerichtet ist, um in dem gleichen Sinuswellenzyklus, das Wechselrichtermodul, das aus der ersten Arbeitsgruppe in eine zweite Arbeitsgruppe umgeschaltet wird, zu steuern, um zu arbeiten, um einen Wechselstrom (ig) zu erzeugen, der in das Stromnetz (ug) zurückgespeist wird, wobei die erste Arbeitsgruppe 1 Wechselrichtermodul umfasst, die zweite Arbeitsgruppe 2 Wechselrichtermodule umfasst, und, wenn die beiden Wechselrichtermodule gesteuert werden, um gleichzeitig zu arbeiten, die Arbeitsfrequenzen der beiden Hochfrequenzbrückenzweige derartig gesteuert werden, dass die Ströme (iLl, iL2) der beiden Hochfrequenzinduktoren in einem Hochfrequenzzyklus stets um 180 Grad versetzt sind, um ein alternatives Arbeiten derartig zu implementieren, dass sich die Dreieckwellen der beiden Ströme überlagern und ihre Hüllkurven einen Ausgangswechselstrom (ig) ausbilden, wobei die Vorrichtung zur Wechselrichtersteuerung weiterhin ein Stromidentifikationsmodul umfasst, das eingerichtet ist, um einen Wert eines Ausgangsstroms (ig) zu identifizieren, der in das Stromnetz (ug) zurückgespeist wird; das erste Steuerungsmodul (22) weiterhin eingerichtet ist, um in dem Sinuswellenzyklus das Wechselrichtermodul in der ersten Arbeitsgruppe zu steuern, um zu arbeiten, wenn das Stromidentifikationsmodul identifiziert, dass der Wert des Ausgangsstroms (ig), der in das Stromnetz (ug) zurückgespeist wird, niedriger sein soll als ein erster Sollschwellenwert ig1; das zweite Steuerungsmodul (23) weiterhin eingerichtet ist, um in dem gleichen Sinuswellenzyklus die Wechselrichtermodule in der zweiten Arbeitsgruppe zu steuern, um gleichzeitig zu arbeiten, wenn das Stromidentifikationsmodul identifiziert, dass der Wert des Ausgangsstroms (ig), der in das Stromnetz (ug) zurückgespeist wird, höher sein soll als ein zweiter Sollschwellenwert ig2; und wobei
2•ig1 = ig2; wobei die zwei Schwellenwerte ig1 und ig2 beide Absolutwerte sind und Arbeitsprozesse einer positiven Halbwelle und einer negativen Halbwelle des Sinuswellenzyklus spiegelbildlich symmetrisch sind.

4. Vorrichtung zur Wechselrichtersteuerung nach Anspruch 3, wobei das erste Steuerungsmodul (22) Folgendes umfasst:
eine erste Signalerzeugungseinheit, die eingerichtet ist, um in dem Sinuswellenzyklus ein Treibersignal zum Steuern der beiden Schalter (Q1, Q2) des Hochfrequenzbrückenzweigs, um abwechselnd zu arbeiten, zu erzeugen;
eine zweite Signalsendeeinheit, die eingerichtet ist, um das Treibersignal an einen Hochfrequenzbrückenzweig (Q1, Q2) jedes Wechselrichtermoduls in der ersten Arbeitsgruppe zu senden, um jedes Wechselrichtermodul in der ersten Arbeitsgruppe zu steuern, um zu arbeiten;
und das zweite Steuerungsmodul (23) Folgendes umfasst:
eine zweite Signalerzeugungseinheit, die eingerichtet ist, ein Treibersignal zum Steuern der beiden Schalter (Q1, Q2; Q3, Q4) des Hochfrequenzbrückenzweigs, um abwechselnd zu arbeiten, zu erzeugen; eine zweite Signalsendeeinheit, die eingerichtet ist, um das Treibersignal an einen Hochfrequenzbrückenzweig (Q1, Q2; Q3, Q4) jedes Wechselrichtermoduls in der zweiten Arbeitsgruppe zu senden, um jedes Wechselrichtermodul, das aus der ersten Arbeitsgruppe in die zweite Arbeitsgruppe umgeschaltet wird, zu steuern, um zu arbeiten.

5. Wechselrichter, Folgendes umfassend:
mindestens zwei Wechselrichtermodule, die zwischen einer Gleichstromeingangsseite (Ubus) und einer Wechselstromausgangsseite verbunden sind, wobei 1 Wechselrichtermodul eine erste Arbeitsgruppe ausbildet und 2 Wechselrichtermodule eine zweite Arbeitsgruppe ausbilden; und
die Vorrichtung zur Wechselrichtersteuerung nach Anspruch 3 oder 4, die mit jedem der Wechselrichtermodule verbunden ist,
wobei:
jedes Wechselrichtermodul einen Hochfrequenzinduktor (L1, L2) und einen Hochfrequenzbrückenzweig umfasst, der durch zwei Schalter (Q1, Q2; Q3, Q4) ausgebildet ist, der Hochfrequenzbrückenzweig mit der Gleichstromeingangsseite (Ubus) verbunden ist und jedes Wechselrichtermodul weiterhin über einen Industriefrequenzbrückenzweig (Q5, Q6) mit der Wechselstromausgangsseite (L4) verbunden ist.

## Revendications

1. Procédé de commande d'un onduleur de courant continu en courant alternatif,
dans lequel la commande d'onduleur détermine, selon une exigence sur un courant alternatif (ig) qui est réinjecté dans un réseau électrique (ug), une valeur d'un courant alternatif qui doit être sorti avec le changement d'un cycle d'onde sinusoïdale,
dans lequel, dans le cycle d'onde sinusoïdale, différentes quantités de modules d'inversion sont commutés et commandés pour fonctionner,
dans lequel chaque module d'inversion comprend une bobine d'inductance haute fréquence (L1, L2) et une branche de pont haute fréquence formée par deux commutateurs (Q1, Q2 ; Q3, Q4), la branche de pont haute fréquence est connectée à une extrémité d'entrée de courant continu (Ubus), et chaque module d'inversion (Q1, Q2 ; Q3, Q4) est en outre connecté à une extrémité de sortie de courant alternatif (L4) à travers une branche de pont à fréquence industrielle commune (Q5, Q6) ;
dans lequel le fait de commander un module d'inversion (Q1, Q2 ; Q3, Q4) pour qu'il fonctionne comprend le fait que deux dispositifs de commutation (Q1, Q2 ; Q3, Q4) de la branche de pont haute fréquence du module d'inversion sont commandés pour être mis sous tension en alternance de sorte qu'un courant (iLl, iL2) dans la bobine d'inductance haute fréquence (L1, L2) du module d'inversion est une onde triangulaire,
le procédé comprenant les étapes consistant à :
dans le cycle d'onde sinusoïdale, commander un module d'inversion dans un premier groupe de travail pour qu'il fonctionne, afin de générer un courant alternatif (ig) qui est réinjecté dans le réseau électrique (ug) ;
dans le même cycle d'onde sinusoïdale, commander le module d'inversion qui est commuté du premier groupe de travail sur un deuxième groupe de travail pour qu'il fonctionne, afin de générer un courant alternatif (ig) qui est réinjecté dans le réseau électrique (ug), le premier groupe de travail comprenant 1 module d'inversion, le deuxième groupe de travail comprenant 2 modules d'inversion, et lorsque les deux modules d'inversion sont commandés pour fonctionner ensemble, les fréquences de travail des deux branches de pont haute fréquence (Q1, Q2 ; Q3, Q4) étant commandées de telle sorte que les courants (iLl, iL2) des deux bobines d'inductance haute fréquence sont toujours décalés de 180 degrés dans un cycle haute fréquence pour mettre en œuvre un fonctionnement alternatif de sorte que les ondes triangulaires des deux courants (iLl, iL2) se recouvrent et leurs enveloppes forment un courant alternatif de sortie (ig), le fait de commander le module d'inversion qui est commuté du premier groupe de travail sur un deuxième groupe de travail pour fonctionner comprenant : selon un changement d'une valeur d'un courant de sortie (ig) qui est réinjecté dans le réseau électrique (ug), le fait de commander le module d'inversion qui est commuté du premier groupe de travail sur le deuxième groupe de travail pour fonctionner, et dans lequel :
dans le cycle d'onde sinusoïdale, le fait de commander un module d'inversion dans un premier groupe de travail pour qu'il fonctionne comprend : dans le cycle d'onde sinusoïdale, lorsqu'il est identifié que la valeur du courant de sortie (ig) qui est réinjecté dans le réseau électrique (ug) doit être inférieure à un premier seuil fixé ig1, le fait de commander le module d'inversion dans le premier groupe de travail pour qu'il fonctionne ;
dans le même cycle d'onde sinusoïdale, le fait de commander le module d'inversion qui est commuté du premier groupe de travail sur le deuxième groupe de travail pour qu'il fonctionne selon un changement d'une valeur d'un courant de sortie (ig) qui est réinjecté dans le réseau électrique (ug) comprend : dans le même cycle d'onde sinusoïdale, lorsqu'il est identifié que la valeur du courant de sortie (ig) qui est réinjecté dans le réseau électrique (ug) doit être supérieure à un deuxième seuil fixé ig2, le fait de commander les modules d'inversion dans le deuxième groupe de travail pour qu'ils fonctionnent simultanément ; et dans lequel
2•ig1 = ig2 ; dans lequel les deux seuils ig1 et ig2 sont tous les deux des valeurs absolues et des processus de fonctionnement d'une demi-onde positive et d'une demi-onde négative du cycle d'onde sinusoïdale sont symétriques sur une image miroir.

2. Procédé selon la revendication 1, dans lequel
dans le cycle d'onde sinusoïdale, le fait de commander un module d'inversion dans un premier groupe de travail pour qu'il fonctionne comprend : dans le cycle d'onde sinusoïdale, la génération d'un signal d'attaque pour commander les deux commutateurs (Q1, Q2) de la branche de pont haute fréquence pour qu'ils fonctionnent en alternance, et l'envoi du signal d'attaque à la branche de pont haute fréquence du module d'inversion dans le premier groupe de travail pour commander le module d'inversion dans le premier groupe de travail pour qu'il fonctionne ; dans le même cycle d'onde sinusoïdale, le fait de commander le module d'inversion qui est commuté du premier groupe de travail sur un deuxième groupe de travail pour qu'il fonctionne comprend : dans le même cycle d'onde sinusoïdale, la génération d'un signal d'attaque pour commander les deux commutateurs (Q1, Q2 ; Q3, Q4) de la branche de pont haute fréquence pour qu'ils fonctionnent alternativement, l'envoi du signal d'attaque à une branche de pont haute fréquence de chaque module d'inversion dans le deuxième groupe de travail pour commander chaque module d'inversion qui est commuté du premier groupe de travail sur le deuxième groupe de travail pour qu'il fonctionne.

3. Appareil de commande d'un onduleur de courant continu en courant alternatif,
l'appareil de commande d'onduleur étant configuré pour déterminer, selon une exigence sur un courant alternatif qui est réinjecté dans un réseau électrique, une valeur d'un courant alternatif (ig) qui doit être sorti avec le changement d'un cycle d'onde sinusoïdale,
dans lequel, dans un cycle d'onde sinusoïdale, différentes quantités de modules d'inversion sont configurés pour être commutés et commandés pour fonctionner, dans lequel chaque module d'inversion comprend une bobine d'inductance haute fréquence (L1, L2) et une branche de pont haute fréquence formée par deux commutateurs (Q1, Q2 ; Q3, Q4), la branche de pont haute fréquence (Q1, Q2 ; Q3, Q4) est connectée à une extrémité d'entrée de courant continu (Ubus), et chaque module d'inversion est en outre connecté à une extrémité de sortie de courant alternatif (L4) à travers une branche de pont à fréquence industrielle (Q5, Q6) ;
dans lequel le fait de commander un module d'inversion pour qu'il fonctionne comprend le fait que deux dispositifs de commutation de la branche de pont haute fréquence (Q1, Q2 ; Q3, Q4) du module d'inversion sont commandés pour être mis sous tension en alternance de sorte qu'un courant (iLl, iL2) dans la bobine d'inductance haute fréquence (L1, L2) du module d'inversion est une onde triangulaire,
l'appareil comprenant :
un premier module de commande (20, 22), configuré, dans un cycle d'onde sinusoïdale, pour commander un module d'inversion dans un premier groupe de travail pour qu'il fonctionne, afin de générer un courant alternatif (ig) qui est réinjecté dans le réseau électrique (ug) ;
un deuxième module de commande (20, 23), configuré, dans le même cycle d'onde sinusoïdale, pour commander le module d'inversion qui est commuté du premier groupe de travail sur un deuxième groupe de travail pour qu'il fonctionne, afin de générer un courant alternatif (ig) qui est réinjecté dans le réseau électrique (ug), le premier groupe de travail comprenant 1 module d'inversion, le deuxième groupe de travail comprenant 2 modules d'inversion, et lorsque les deux modules d'inversion sont commandés pour fonctionner simultanément, les fréquences de travail des deux branches de pont haute fréquence étant commandées de telle sorte que les courants (iLl, iL2) des deux bobines d'inductance haute fréquence sont toujours décalés de 180 degrés dans un cycle haute fréquence pour mettre en œuvre un fonctionnement alternatif de sorte que les ondes triangulaires des deux courants se recouvrent et leurs enveloppes forment un courant alternatif de sortie (ig), dans lequel l'appareil pour la commande d'onduleur comprend en outre un module d'identification de courant, configuré pour identifier une valeur d'un courant de sortie (ig) qui est réinjecté dans le réseau électrique (ug) ;
le premier module de commande (22) est en outre configuré, dans le cycle d'onde sinusoïdale, pour commander le module d'inversion dans le premier groupe de travail pour qu'il fonctionne lorsque le module d'identification de courant identifie que la valeur du courant de sortie (ig) qui est réinjecté dans le réseau électrique (ug) doit être inférieure à un premier seuil fixé ig1 ;
le deuxième module de commande (23) est en outre configuré, dans le même cycle d'onde sinusoïdale, pour commander les modules d'inversion dans le deuxième groupe de travail pour qu'ils fonctionnent simultanément lorsque le module d'identification de courant identifie que la valeur du courant de sortie (ig) qui est réinjecté dans le réseau électrique (ug) doit être supérieure à un deuxième seuil fixé ig2 ; et dans lequel
2•ig1 = ig2 ; dans lequel les deux seuils ig1 et ig2 sont tous les deux des valeurs absolues et des processus de fonctionnement d'une demi-onde positive et d'une demi-onde négative du cycle d'onde sinusoïdale sont symétriques sur une image miroir.

4. Appareil pour la commande d'onduleur selon la revendication 3, dans lequel le premier module de commande (22) comprend :
une première unité de génération de signal, configurée, dans le cycle d'onde sinusoïdale, pour générer un signal d'attaque permettant de commander les deux commutateurs (Q1, Q2) de la branche de pont haute fréquence pour qu'ils fonctionnent en alternance ;
une deuxième unité d'envoi de signal, configurée pour envoyer le signal d'attaque à une branche de pont haute fréquence (Q1, Q2) de chaque module d'inversion dans le premier groupe de travail, pour commander chaque module d'inversion dans le premier groupe de travail pour qu'il fonctionne ;
et le deuxième module de commande (23) comprend :
une deuxième unité de génération de signal, configurée pour générer un signal d'attaque permettant de commander les deux commutateurs (Q1, Q2 ; Q3, Q4) de la branche de pont haute fréquence pour qu'ils fonctionnent en alternance ;
une deuxième unité d'envoi de signal, configurée pour envoyer le signal d'attaque à une branche de pont haute fréquence (Q1, Q2 ; Q3, Q4) de chaque module d'inversion dans le deuxième groupe de travail, pour commander chaque module d'inversion qui est commuté du premier groupe de travail sur le deuxième groupe de travail pour qu'il fonctionne.

5. Onduleur, comprenant :
au moins deux modules d'inversion, connectés entre une extrémité d'entrée de courant continu (Ubus) et une extrémité de sortie de courant alternatif, 1 module d'onduleur formant un premier groupe de travail, et 2 modules d'onduleur formant un deuxième groupe de travail ; et
l'appareil pour la commande d'onduleur selon la revendication 3 ou 4, connecté à chacun des modules d'inversion,
dans lequel :
chaque module d'inversion comprend une bobine d'inductance haute fréquence (L1, L2) et une branche de pont haute fréquence formée par deux commutateurs (Q1, Q2 ; Q3, Q4), la branche de pont haute fréquence est connectée à l'extrémité d'entrée de courant continu (Ubus), et chaque module d'inversion est en outre connecté à l'extrémité de sortie de courant alternatif (L4) à travers une branche de pont à fréquence industrielle (Q5, Q6).
